# EUROPÄISCHE PATENTSCHRIFT

(11) **EP 1 307 937 B1**
(45) Veröffentlichungstag und Bekanntmachung des Hinweises auf die Patenterteilung: **30.04.2008**
(21) Anmeldenummer: 01270916.8
(22) Anmeldetag: 17.11.2001
(51) Int. Cl.: H01M 8/00

(54) **BRENNSTOFFZELLENSYSTEM IN EINEM FAHRZEUG MIT EINEM VERBRENNUNGS-MOTOR UND VERFAHREN ZU DESSEN BETRIEB**
FUEL CELL SYSTEM IN A VEHICLE WITH AN INTERNAL COMBUSTION ENGINE, AND METHOD FOR THE OPERATION THEREOF
SYSTEME DE PILES A COMBUSTIBLE DANS UN VEHICULE DOTE D'UN MOTEUR A COMBUSTION ET PROCEDE PERMETTANT SON FONCTIONNEMENT

(30) Priorität: 16.12.2000 DE 10062965
(43) Veröffentlichungstag der Anmeldung: 07.05.2003
(73) Patentinhaber: Bayerische Motoren Werke Aktiengesellschaft, 80809 München (DE)
(72) Erfinder: TACHTLER, Joachim, 85737 Ismaning (DE); DR. WETZEL, Franz-Josef, 82216 Gerlinden (DE)
(86) Internationale Anmeldenummer: PCT/EP2001/013313
(87) Internationale Veröffentlichungsnummer: WO 2002/049131

(56) Entgegenhaltungen:
- EP-A- 0 751 045
- EP-A- 1 047 144
- EP-A- 1 057 998

## Beschreibung

Die Erfindung betrifft ein Brennstoffzellensystem in einem Fahrzeug mit einem Verbrennungsmotor und ein Verfahren zu dessen Betrieb gemäß den Oberbegriffen der Ansprüche 1, 3 bzw. 8.

Es ist bekannt, eine Brennstoffzelle zur Stromerzeugung in einem Fahrzeug einzusetzen. In einer speziellen Ausführungsform wird als Primärantrieb des Fahrzeugs ein herkömmlicher Verbrennungsmotor verwendet, der durch die Verbrennung eines Brenngases über einen Kolben eine Kurbelwelle antreibt Ferner wird zur motorunabhängigen Stromversorgung eine Brennstoffzelle zum Betrieb eines Bordnetzes eingesetzt. Die Brennstoffzelle wird beispielsweise mit Wasserstoff oder einem in einem Reformer erzeugten Brenngas betrieben.

EP 751 045 offenbart ein mit eimen Verbrennungsmotor angetriebenes Kraftfahrzeug, welches ein Brennstoffzellensystem zur Erzeugung von elektrischer Energie aufweist.

Die maximale Leistung einer Brennstoffzelle ist von einem Brenngasvolumenstrom abhängig. Wird die Brennstoffzelle mit mehr Brenngas versorgt, als dies die elektrische Leistungsanforderung verlangt, so wird das unverbrauchte Brenngas in der Regel an die Umgebung abgegeben. Die Kraftstoffausnutzung beträgt bei einer solchen Vorgehensweise, insbesondere bei Verwendung einer Reformerumwandlung, in der Regel weniger als 80%.

Um auch mit einer Brennstoffzelle Lastsprünge wie bei einer Batterie sicherstellen zu können, muss ferner immer eine ausreichende Menge eines Reaktionsgases zur Verfügung stehen. Dies führt herkömmlicherweise dazu, dass in einem Pufferbehälter oder durch eine aufwendige Regelung, die Abgabe des Reaktionsgases an die Brennstoffzelle bestimmt wird. Es ist auch bekannt, einen höheren Volumenstrom als notwendig zur Verfügung zu stellen. Anderenfalls kann eine Anhebung der elektrischen Last nur entsprechend dem Lastwechselverhalten der Reaktandenversorgung erfolgen.

Bei einer plötzlichen Wegnahme der elektrischen Last geht dann jedoch - wie oben angegeben - Brenngas ungenutzt durch die Brennstoffzelle hindurch, bis der Volumenstrom mit einer entsprechenden Verzögerung auf die notwendige Menge reduziert werden kann.

Aufgabe der vorliegenden Erfindung ist es, ein Brennstoffzellensystem und ein Verfahren zum Betrieb eines solchen Systems anzugeben, bei dem das zum Betreiben der Brennstoffzelle verwendete Brenngas nicht unnötig verschwendet und der Gesamtwirkungsgrad des Systems erhöht wird, jedoch immer eine ausreichende elektrische Leistung zur Verfügung steht.

Diese Aufgabe wird durch die in den Ansprüchen 1, 3 und 8 angegebenen Merkmale alternativ gelöst.

Ein Kerngedanke der vorliegenden Erfindung besteht darin, immer einen ausreichenden Kraftstoff-Volumenstrom für die Brennstoffzelle bereitzustellen, so dass auch maximale elektrische Leistungsanforderungen erfüllt werden können. Um einen eventuell vorhandenen Überschuss eines Brenngases aus der Brennstoffzelle jedoch nicht an die Umgebung abgeben zu müssen, sondern weiter nutzen zu können, ist die Brennstoffzelle entsprechend den verschiedenen Ausführungsvarianten entweder mit dem Verbrennungsmotor und/oder einem Nachbrenner verbindbar. Das überschüssige Brenngas wird dann diesen nachgeschalteten Systemen zugeführt und darin verwertet.

Insgesamt wird die Brennstoffzelle beim Betrieb des Verbrennungsmotors im Wesentlichen mit einem relativ konstanten Volumenstrom des Brenngases betrieben. Dieser Volumenstrom sollte mittelfristig so ausgelegt sein, dass die maximale momentan oder zukünftig angeforderte elektrische Leistung erzeugbar ist. Wird der Überschuss an Brenngas dann im Verbrennungsmotor verwertet, so dient er dem zusätzlichen Antrieb des Fahrzeugs. Bei einer Verwertung des überschüssigen Brenngases in einem Zusatzheizgerät (Nachbrenner), kann beispielsweise das Kühlwasser für den Verbrennungsmotor vorgeheizt werden. Dies ermöglicht nicht nur geringere Reibungsverluste des Motors beim Start, sondern auch eine Standheizungsfunktion.

Bei abgestelltem Verbrennungsmotor richtet sich die Menge des Brenngases beispielsweise nach dem Hauptverbraucher, z. B. einer elektrischen Klimaanlage oder einer Beleuchtung.

Um die Strömung des überschüssigen Brenngases zum Verbrennungsmotor oder zu der Zusatzheizeinrichtung steuern zu können, ist in der entsprechenden Strömungsrichtung vorzugsweise ein steuerbares Ventil angeordnet. Sollte dieses Ventil auch bei einem Betrieb der Brennstoffzelle vollständig geschlossen werden müssen, so sollte man zudem eine Entlüftungsmöglichkeit an die Umgebung vorsehen.

Gemäß einer besonders bevorzugten Ausführungsform können die überschüssigen Brenngase wahlweise einer Zusatzheizeinrichtung und/oder dem Verbrennungsmotor, und zwar je nach Bedürfnissen zugeleitet werden. Entsprechende konstruktive Anordnungen sind dann vorzusehen.

Natürlich kann die Brennstoffzelle immer mit einem maximalen Volumenstrom betrieben werden. Gemäß einer besonders bevorzugten Ausführungsform wird ein Volumenstrom jedoch betriebsabhängig eingestellt. Dabei wertet eine Steuereinrichtung zur Verfügung stehende Eingangssignale, beispielsweise die benötigte elektrische Leistung verschiedener Verbraucher aus, und wählt einen diesen Anforderungen genügenden Volumenstrom für das Brenngas. Neben dem aktuellen Leistungsverbrauch von aktiven elektrischen Vorrichtungen, wie Klimaanlage, Licht, Energieversorgung für Steuergeräte etc., oder einem abzusehenden zukünftigen Leistungsverbrauch solcher Einrichtungen, können auch noch andere Informationen wie zusätzliche Fahrzeugsbetriebsdaten und/oder Umgebungsdaten der Steuereinrichtung als Eingangssignale zugeführt werden. Beispielsweise kann man bei tiefen Umgebungstemperaturen darauf schließen, dass eine Vorheizung eines Fahrzeugs notwendig ist. Andererseits kann man bei hohen Außentemperaturen darauf schließen, dass eine Klimaanlage eingeschaltet werden wird. Sollte überdies sogenannte Break-by-wire-Systeme verwendet werden, so muss zudem, beispielsweise bei hohen Geschwindigkeiten, darauf geachtet werden, dass immer eine ausreichende Betriebsleistung für die Bremsen zur Verfügung steht.

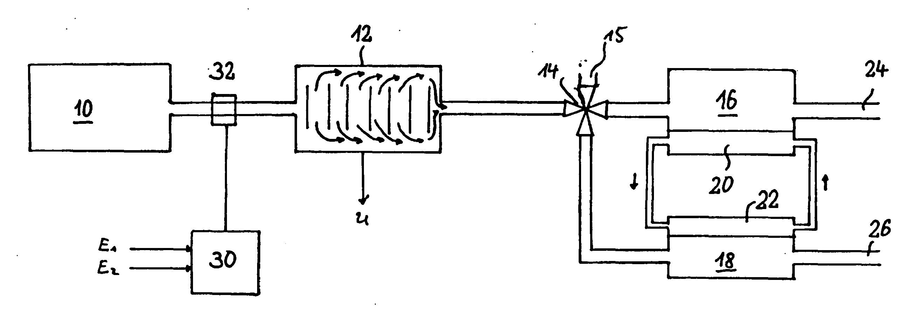

Eine einfache Ausführungsform der vorliegenden Erfindung wird nachfolgend anhand einer einzigen Zeichnung näher erläutert.

Die Zeichnung zeigt eine Brennstoffzelle 12, die Wasserstoff aus einem Wasserstofftank 10 erhält. In der Fluidverbindung zwischen dem Wasserstofftank 10 und der Brennstoffzelle 12 ist eine Volumenstromregeleinrichtung 32 (Ventil/Pumpe) angeordnet, die von einer Steuereinrichtung 30 beaufschlagt wird. Die Steuereinrichtung 30 erhält Eingangsinformationen E₁, E₂, aufgrund derer sie den Volumenstrom für eine maximal benötigte Leistung berechnet und über die Volumenstromregeleinrichtung 32 einstellt. Die Brennstoffzelle 12 erzeugt eine elektrische Energie U und stellt diese je nach Anforderung dem nicht näher dargestellten Bordnetz zur Verfügung. Wird nun ein größerer Volumenstrom durch die Brennstoffzelle 12 geschickt, als dies für die Erzeugung der elektrischen Leistung notwendig ist, so geht dieser über einen Brennstoffzellenauslaß an einen Verbrennungsmotor 16 oder einen Nachbrenner 18. Die Steuerung des Überschussbrenngases wird dabei von einer Ventileinrichtung 14 übernommen, welche je nach Anforderung das überschüssige Brenngas zum Verbrennungsmotor 16, dem Nachbrenner 18 oder, falls dies notwendig ist, an die Umgebung, (Auslass 15) abführt. Im Verbrennungsmotor 16 wird das überschüssige Brenngas dem übrigen Brenngas in geeigneter Weise beigemischt, wobei auf die Einzelheiten hier nicht näher eingegangen wird. Werden die überschüssigen Brenngase hingegen dem Nachbrenner 18 zugeführt, so wird damit über einen Wärmetauscher 22 das Kühlwasser im Kühlkreislauf 20 des Verbrennungsmotors 16 erwärmt. Die entstehenden Abgase aus dem Verbrennungsmotor 16 beziehungsweise dem Nachbrenner 18 werden über entsprechende Auslässe 24 und 26 an die Umgebung abgeführt. Wird Wasserstoff als Brenngas verwendet, so entsteht als Abgas nur Wasser.

Die vorliegende Erfindung gibt eine einfache Möglichkeit, eine Brennstoffzelle gesamtwirkungsgradmäßig optimal zu betreiben, ohne auf die Möglichkeit der Realisierung von Lastsprüngen bei der Stromversorgung in einem Fahrzeug verzichten zu müssen. Würde im Verbrennungsmotor zudem ein anderes Brenngas als Wasserstoff verwendet werden, so könnte durch die Vorheizung auch die Kaltstartemission verbessert werden. Zudem könnte auch ein Abgaskatalysator geheizt werden, was sich ebenfalls positiv auf das Emissionsverhalten im Kaltstartbereich auswirkt. Überdies steht durch die Nutzung des Brenngases zur Erwärmung des Kühlwassers eine Standheizung zur Verfügung, und der Motor kann mit geringen Reibungsverlusten beim Start betrieben werden. Das System benötigt darüber hinaus keine übermäßig aufwendige Regelung und weniger Bauteile, was sich insgesamt positiv auf die Kosten, das Bauvolumen und das Gesamtgewicht des Systems auswirkt.

## Patentansprüche

1. Brennstoffzellensystem in einem Fahrzeug mit Verbrennungsmotor umfassend zumindest eine mit Wasserstoff oder in einem Reformer erzeugtem Brenngas betreibbare Brennstoffzelle (12) und einem mit dem gleichen oder einem anderen Brenngas betriebenen Verbrennungsmotor (16),
**dadurch gekennzeichnet,**
**dass** ein Ausgang der Brennstoffzelle (12) mit einem Einlaß des Verbrennungsmotors (16) in Strömungsverbindung bringbar ist, um das Abgas aus der Brennstoffzelle in den Brennraum des Verbrennungsmotors einzuleiten.

2. Brennstoffzellensystem nach Anspruch 1,
**dadurch gekennzeichnet,**
**dass** in der Strömungsverbindung zwischen der Brennstoffzelle (12) und dem Verbrennungsmotor (16) ein steuerbares Ventilelement (14) angeordnet ist.

3. Brennstoffzellensystem in einem Fahrzeug mit Verbrennungsmotor umfassend zumindest eine mit Wasserstoff oder in einem Reformer erzeugtem Brenngas betreibbare Brennstoffzelle (12), einem mit dem gleichen oder einem anderen Brenngas betriebenen Verbrennungsmotor (16) sowie einer mit einem Brenngas betreibbaren Zusatzheizeinrichtung (18),
**dadurch gekennzeichnet,**
**dass** ein Ausgang der Brennstoffzelle (12) mit einem Einlaß der Zusatzheizeinrichtung (18) in Verbindung bringbar ist, um das Abgas aus der Brennstoffzelle (12) in den Brennraum des Zusatzheizgerätes (18) einzuleiten.

4. Brennstoffzellensystem nach Anspruch 3,
**dadurch gekennzeichnet,**
**dass** die Zusatzheizeinrichtung (18) zur Heizung des Kühlwasser des Verbrennungsmotors (16) dient.

5. Brennstoffzellensystem nach einem der Ansprüche 3 oder 4,
**dadurch gekennzeichnet,**
**dass** der Ausgang der Brennstoffzelle (12) zusätzlich mit einem Einlaß des Verbrennungsmotors (16) in Verbindung bringbar ist, um das Abgas aus der Brennstoffzelle (12) wahlweise auch in den Brennraum des Verbrennungsmotors (16) einleiten zu können.

6. Brennstoffzellensystem nach einem der Ansprüche 3 bis 5,
**dadurch gekennzeichnet,**
**dass** in der Strömungsverbindung zwischen der Brennstoffzelle (12) einerseits und dem Verbrennungsmotor (16) und dem Zusatzheizgerät (18) andererseits ein steuerbares Ventilelement (14) angeordnet ist, welches den Abgasstrom von der Brennstoffzelle (12) zum Verbrennungsmotor (16) und/oder zum Zusatzheizgerät (18) bestimmt.

7. Brennstoffzelle nach einem der vorhergehenden Ansprüche,
**dadurch gekennzeichnet,**
**dass** eine Steuereinrichtung (30) vorgesehen ist, die Eingänge für Eingangssignale (E1, E2) umfaßt, aufgrund welcher der Volumenstrom zum Betrieb der Brennstoffzelle (12) bestimmbar ist, dass die Steuereinrichtung (30) ausgebildet ist, um aus den Eingangssignalen (E1, E2) eine maximal benötigte Leistung zu bestimmen und dass die Steuereinrichtung (30) eine in einer Zufuhrleitung zur Brennstoffzelle angeordnete Regeleinrichtung (32) zur Versorgung der Brennstoffzelle mit dem bestimmten Volumenstrom beaufschlagt.

8. Verfahren zum Betrieb eines Brennstoffzellensystems nach Anspruch 7,
**dadurch gekennzeichnet,**
**dass** der Steuereinrichtung (30) Informationen von aktiven oder zu aktivierenden elektrischen Verbrauchern (E1, E2) zugeführt werden,
**dass** aus diesen Informationen eine maximale, zur Verfügung zu stellende elektrische Leistung bestimmt wird und
**dass** die Steuereinrichtung der Brennstoffzelle einen Volumenstrom zur Verfügung stellt, um die maximale elektrische Leistung erzeugen zu können.

9. Verfahren nach Anspruch 8,
**dadurch gekennzeichnet,**
**dass** der Steuereinrichtung die Information von einem elektrischen Hauptverbraucher zugeführt wird.

10. Verfahren nach Anspruch 8 oder 9,
**dadurch gekennzeichnet,**
**dass** der Steuereinrichtung zusätzlich Fahrzeugbetriebsdaten und/oder Umgebungsdaten zugeführt werden.

## Claims

1. A fuel cell system in a vehicle with an internal combustion engine, comprising at least one fuel cell (12) operated with hydrogen or with fuel gas generated in a reformer, and also comprising an internal combustion engine (16) operated with the same or a different fuel gas,
**characterised in that**
an output of the fuel cell (12) can be brought into flow connection with an inlet of the internal combustion engine (16) in order to introduce exhaust gas from the fuel cell into the combustion chamber of the engine.

2. A fuel cell system according to claim 1,
**characterised in that**
a controllable valve element (14) is disposed in the flow connection between the fuel cell (12) and the engine (16).

3. A fuel cell system in a vehicle with an internal combustion engine, comprising at least one fuel cell (12) operated with hydrogen or with a fuel gas generated in a reformer, an internal combustion engine (16) operated with the same or a different fuel gas, and an additional heater (18) operated with a fuel gas,
**characterised in that**
an output of the fuel cell (12) can be connected to an inlet of the additional heater (18) in order to introduce exhaust gas from the fuel cell (12) into the combustion chamber of the additional heater (18).

4. A fuel cell system according to claim 3,
**characterised in that**
the additional heater (18) heats the cooling water for the engine (16).

5. A system according to claim 3 or claim 4,
**characterised in that**
the output of the fuel cell (12) can also be connected to an inlet of the engine (16) in order to introduce exhaust gas from the cell (12) into the engine combustion chamber (16) also if required.

6. A fuel cell system according to any of claims 3 to 5,
**characterised in that**
a controllable valve element (14) is disposed in the flow connection between the fuel cell (12) on the one hand and the engine (16) and the additional heater (18) on the other hand and determines the flow rate of exhaust gas from the fuel cell (12) to the engine (16) and/or to the additional heater (18).

7. A fuel cell according to any of the preceding claims,
**characterised in that**
a control device (30) is provided with inputs for signals (E₁, E₂) which it uses to determine the flow rate for operating the fuel cell (1 2), the control device (30) is designed to determine the maximum power required, using the input signals (E₁, E₂), and the control device (30) acts on a closed-loop device (32) disposed in a supply line to the fuel cell so as to supply the cell at the required flow rate.

8. A method of operating a fuel-cell system according to claim 7,
**characterised in that**
the control device (30) is supplied with information about active or activatable electric consumers (E₁, E₂),
this information is used to determine a maximum required electric power and
the fuel-cell control device provides a flow at the rate for generating the maximum electric power.

9. A method according to claim 8,
**characterised in that**
the control device is supplied with the information from a main electricity consumer.

10. A method according to claim 8 or claim 9,
**characterised in that**
the control device is additionally supplied with vehicle operating data and/or environmental data.

## Revendications

1. Système de pile à combustible d'un véhicule équipé d'un moteur à combustion interne comprenant au moins une pile à combustible (12) fonctionnant avec de l'hydrogène ou un gaz combustible généré dans un réformeur, ainsi qu'un moteur à combustion interne (16) fonctionnant avec le même gaz ou un autre gaz combustible,
**caractérisé en ce que**
la sortie de la pile à combustible (12) est mise en communication fluidique avec l'entrée du moteur à combustion interne (16) pour faire passer le gaz d'échappement de la pile à combustible dans la chambre de combustion du moteur à combustion interne.

2. Système de pile à combustible selon la revendication 1,
**caractérisé par**
un élément de vanne commandé (14) installé dans la liaison fluidique entre la pile à combustible (12) et le moteur à combustion interne (16).

3. Système de pile à combustible de véhicule équipé d'un moteur à combustion interne comprenant au moins une pile à combustible (12) fonctionnant avec de l'hydrogène ou un gaz combustible généré dans un réformeur, un moteur à combustion interne (16) fonctionnant avec le même gaz ou un autre gaz combustible ainsi qu'une installation complémentaire de chauffage (18) fonctionnant avec un gaz combustible,
**caractérisé en ce que**
la sortie de la pile à combustible (12) est reliée à l'entrée de l'installation complémentaire de chauffage (18) pour faire passer les gaz d'échappement de la pile à combustible (12) dans la chambre de combustion de l'appareil complémentaire de chauffage (18).

4. Système de pile à combustible selon la revendication 3,
**caractérisé en ce que**
l'installation complémentaire de chauffage (18) sert à chauffer l'eau de refroidissement du moteur à combustion interne (16).

5. Système de pile à combustible selon l'une des revendications 3 ou 4,
**caractérisé en ce que**
la sortie de la pile à combustible (12) est en outre mise en liaison avec l'entrée du moteur à combustion interne (16) pour conduire les gaz d'échappement de la pile à combustible (12) également au choix dans la chambre de combustion du moteur à combustion interne (16).

6. Système de pile à combustible selon l'une des revendications 3 à 5,
**caractérisé en ce que**
la liaison fluidique comporte un élément de vanne commandé (14) entre d'une part la pile à combustible (12) et d'autre part le moteur à combustion interne (16) et l'appareil complémentaire de chauffage (18) pour déterminer le débit de gaz d'échappement fourni par la pile à combustible (12) au moteur à combustion interne (16) et/ou à l'appareil complémentaire de chauffage (18).

7. Système de pile à combustible selon l'une des revendications précédentes,
**caractérisé par**
une installation de commande (30) avec des entrées pour des signaux d'entrée (E1, E2) permettant de déterminer le débit volumique de fonctionnement de la pile à combustible (12),
l'installation de commande (30) étant réalisée pour déterminer la puissance maximale nécessaire à partir des signaux d'entrée (E1, E2), et
l'installation de commande (30) comporte une installation de régulation (32) dans la conduite d'alimentation de la pile à combustible pour alimenter la pile à combustible avec un certain débit volumique.

8. Procédé de gestion d'un système de pile à combustible selon la revendication 7,
**caractérisé en ce que**
l'installation de commande (30) reçoit des informations de consommateurs électriques (E1, E2), activés ou qu'il faut activer,
à partir de ces informations, on détermine une puissance électrique maximale à fournir, et
l'installation de commande de la pile à combustible reçoit le débit volumique nécessaire pour fournir la puissance électrique maximale.

9. Procédé selon la revendication 8,
**caractérisé en ce que**
l'installation de commande reçoit l'information d'un consommateur électrique principal.

10. Procédé selon l'une des revendications 8 ou 9,
**caractérisé en ce que**
l'installation de commande reçoit en plus des données de fonctionnement du véhicule et/ ou des données concernant l'environnement.
